(19) Europäisches Patentamt
European Patent Office
Office européen des brevets

(11) **EP 2 379 392 B1**

(12) **EUROPÄISCHE PATENTSCHRIFT**

(45) Veröffentlichungstag und Bekanntmachung des Hinweises auf die Patenterteilung:
**09.01.2013 Patentblatt 2013/02**

(21) Anmeldenummer: **09753106.5**

(22) Anmeldetag: **17.11.2009**

(51) Int Cl.:
*B60W 30/184* (2012.01)   *B60W 10/08* (2006.01)
*B60W 10/26* (2006.01)   *B60W 10/06* (2006.01)
*B60W 10/10* (2012.01)

(86) Internationale Anmeldenummer:
**PCT/EP2009/065274**

(87) Internationale Veröffentlichungsnummer:
**WO 2010/072469 (01.07.2010 Gazette 2010/26)**

(54) **VERFAHREN ZUR REDUKTION EINER ANTRIEBSLEISTUNG EINES FAHRZEUGANTRIEBS**

METHOD FOR REDUCING THE DRIVE POWER OF A VEHICLE DRIVE

PROCÉDÉ DE RÉDUCTION DE LA PUISSANCE DU MÉCANISME D'ENTRAÎNEMENT D'UN VÉHICULE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **16.12.2008 DE 102008054699**

(43) Veröffentlichungstag der Anmeldung:
**26.10.2011 Patentblatt 2011/43**

(73) Patentinhaber: **Robert Bosch GmbH**
**70442 Stuttgart (DE)**

(72) Erfinder: **FASSNACHT, Jochen**
**75365 Calw (DE)**

(56) Entgegenhaltungen:
**EP-A2- 1 247 687      DE-A1-102004 040 315**
**JP-A- 2000 032 602    JP-A- 2004 324 613**
**JP-A- 2007 244 072**

EP 2 379 392 B1

**Beschreibung**

Stand der Technik

Die vorliegende Erfindung betrifft das Gebiet der Leistungsreduktion in Fahrzeugantrieben zur Temperaturabsenkung.

Die Leistungsfähigkeit von Komponenten eines Fahrzeugantriebs hängt im Wesentlichen von der Wärmeentwicklung bzw. von der Temperatur der jeweiligen Komponente des Fahrzeugantriebs ab. So weist beispielsweise ein elektrischer Antrieb oder ein Energiespeicher eines Elektrofahrzeugs bzw. eines Hybridfahrzeugs einen Temperaturgang auf, welcher dazu führt, dass die jeweilige Komponente mit reduzierter Leistung betrieben werden muss, falls deren Temperatur einen maximalen Temperaturwert erreicht, bei welchem diese Komponente beschädigt werden kann. Diese Leistungsreduktion, auch Derating genannt, ist nicht problematisch, solange sie nicht in Fahrsituationen durchgeführt wird, in denen der Fahrer beispielsweise die volle Antriebsleistung erwartet oder benötigt, um beispielsweise einen Überholvorgang auf einer Gegenfahrbahn durchzuführen oder um auf eine Autobahn zu wechseln. Die Leistungsreduktion ist insbesondere bei sportlicher Fahrt kritisch, welche die Bereitstellung der vollen Antriebsleistung erforderlich macht.

Zur Leistungsreduktion zwecks Vermeidung von kritischen Komponententemperaturen wird üblicherweise eine Übertemperaturleistungsabregelung eingesetzt, welche bei Eintritt einer kritischen Temperatur beispielsweise eine kurzzeitige Abstellung des Fahrzeugs oder einen Betrieb des Fahrzeugs in einem Zustand, in welchem eine Abkühlung der jeweiligen Komponente eintritt, erzwingt, wobei die Fahrt nach einer Abkühlung wieder fortgesetzt werden. Handelt es sich bei der betroffenen Komponente beispielsweise um einen Generator in einem leistungsverzweigenden Hybridfahrzeugantriebsstrang, welcher einen Elektromotor eines Elektrofahrzeugs mit elektrischer Energie versorgt, so wird bei Erreichen einer Generatorübertemperatur die Antriebsleistung abrupt reduziert, sodass das Fahrzeug maximal in einem Kriechbetrieb betrieben werden kann. Zur Reduktion der Antriebsleistung kann beispielsweise eine Stromreduktion, wie sie in der japanischen Druckschrift 11-215888 beschrieben ist, durchgeführt werden.

Zur Vermeidung der Leistungsreduktion besteht zwar die Möglichkeit, den Fahrzeugantrieb auf eine maximale Dauerantriebsleistung auszulegen. Hierzu ist jedoch eine Überauslegung des Gesamtsystems zur Vermeidung des seltenen Spezialfalls der Übertemperaturleistungsabregelung notwendig, welche mit hohen Zusatzkosten verbunden ist. Zwar könnte der Fahrer durch eine Anzeige auf beispielsweise eine als zu erreichende Komponententemperatur sowie auf eine bevorstehende Leistungsreduktion hingewiesen werden. Dies setzt allerdings voraus, dass der Fahrer diese Anzeige auch sieht und beachtet. Nachteilig dabei ist, dass es bei Nichtbeachtung einer derartigen Anzeige zur Beschädigung einer der Komponenten durch eine Überlastung oder zum Entstehen von gefährlichen Fahrsituationen durch eine abrupte Leistungsreduktion kommen kann.

JP 2000 032602 A offenbart ein Verfahren zur Reduktion einer Antriebsleistung eines Fahrzeugantriebs, mit: Erfassen eines Temperaturunterschieds zwischen einer Temperatur zumindest einer Komponente des Fahrzeugantriebs und einem Temperaturschwellwert; Erfassen eines gegenwärtigen Fahrzustandes des Fahrzeugantriebs; und Reduzieren der Antriebsleistung des Fahrzeugantriebs zur Senkung der Temperatur der zumindest einen Komponente, um den Temperaturunterschied zu erhöhen.

Offenbarung der Erfindung

Die Erfindung basiert auf der Erkenntnis, dass eine Reduktion der Antriebsleistung bei gleichzeitiger Vermeidung von kritischen Fahrsituationen fahrzustand-abhängig insbesondere in einem Fahrzustand durchgeführt wird, in welchem die Antriebsleistung sicher reduziert werden kann. Hierzu geeignete Fahrzustände sind neben Fahrt mit geringer Vortriebsleistung bzw. mit konstanter oder sinkender Geschwindigkeit insbesondere Brems- oder Rekuperationszustände.

Gemäß einem Aspekt betrifft die Erfindung ein Verfahren zur Reduktion einer Antriebsleistung eines Fahrzeugantriebs mit Erfassen eines Temperaturunterschieds zwischen einer Temperatur zumindest einer Komponente des Fahrzeugantriebs und einem Temperaturschwellwert, Erfassen eines gegenwärtigen Fahrzustandes des Fahrzeugantriebs, Feststellen, ob der gegenwärtige Fahrzustand eine Reduktion der Antriebsleistung zulässt oder nicht zulässt, und Reduzieren der Antriebsleistung des Fahrzeugantriebs zur Senkung der Temperatur der zu- mindest einen Komponente, um den Temperaturunterschied zu erhöhen, falls der gegenwärtige Fahrzustand die reduzierte Antriebsleistung zulässt. Dadurch wird die Reduktion der Antriebsleistung in vorteilhafter Weise auf Fahrzustände verlagert, welche bei reduzierter Antriebsleistung nicht sicherheitskritisch sind.

Gemäß einer Ausführungsform wird die Antriebsleistung nicht reduziert, falls der gegenwärtige Fahrzustand eine Reduktion der Antriebsleistung nicht zulässt. Somit wird in vorteilhafter Weise sichergestellt, dass die Antriebsreduktion nur in Fahrzuständen durchgeführt wird, welche hierzu vorgesehen sind.

Gemäß einer Ausführungsform lässt der gegenwärtige Fahrzustand eine Reduktion der Antriebsleistung dann zu, wenn dieser ein konstanter oder ein gebremster Fahrzustand oder ein Rekuperationszustand oder ein beschleunigter Zustand mit einem unterhalb eines Beschleunigungsschwellwerts liegenden Beschleunigungswert ist. Der Beschleunigungsschwellwert kann beispielsweise 0,5 m/s² oder 1 m/s² betragen. Der gegenwärtige Fahrzustand lässt hingegen keine Reduktion der Antriebsleistung zu, wenn dieser ein Überholfahrzustand oder ein beschleunigter Fahrzustand mit einem oberhalb des beispielsweise vorgenannten Beschleunigungswertes liegenden Beschleunigungswert ist. Somit können die für die Antriebsleistungsreduktion vorteilhaften Fahrzustände einfach und sicher erfasst werden.

Gemäß einer Ausführungsform wird die Antriebsleistung ferner nur dann reduziert, wenn ein vorbestimmter oder ein erwarteter bzw. nachfolgender Fahrzustand mit einem Anstieg der Temperatur der Komponente verbunden ist, welcher nicht geringer, d.h. gleich oder höher, als der Temperaturunterschied ist. Dadurch wird in vorteilhafter Weise sichergestellt, dass die Reduktion der Antriebsleistung nur dann durchgeführt wird, wenn diese auch notwendig ist.

Gemäß einer Ausführungsform ist der vorbestimmte oder erwartete Fahrzustand ein beschleunigter Fahrzustand oder ein Überholfahrzustand, in dem in vorteilhafter Weise die Leistungsreduktion nicht durchgeführt wird.

Gemäß einer Ausführungsform wird der erwartete Fahrzustand beispielsweise anhand einer Gaspedalstellung oder einer Momentenanforderung oder einer Beschleunigungsanforderung durch den Fahrer oder einer Beschleunigungsmessung erfasst. Somit kann in vorteilhafter Weise sichergestellt werden, dass für den nachfolgenden, kritischen Fahrzustand genügend Leistungsreserven zur Verfügung stehen.

Gemäß einer Ausführungsform wird in dem Schritt des Feststellens, ob der gegenwärtige Fahrzustand eine Reduktion der Antriebsleistung zulässt oder nicht zulässt, dieser mit zumindest einem Referenzfahrzustand aus beispielsweise einer Mehrzahl von Referenzfahrzuständen verglichen. Die Referenzfahrzustände können in vorteilhafter Weise in einem elektronischen Speicher oder in einer Look-up-Tabelle abgelegt werden und zeigen an, ob der jeweilige Fahrzustand für die Durchführung einer Leistungsreduktion geeignet oder ungeeignet ist.

Gemäß einer Ausführungsform ist die Komponente ein Elektromotor oder ein Verbrennungsmotor oder ein Energiespeicher oder ein Getriebe oder ein Inverter oder ein Pulswechselrichter oder eine Sub-Komponente der vorgenannten Komponenten. Zur Erfassung der Temperatur der jeweiligen Komponente kann ferner ein Temperatursensor eingesetzt werden.

Gemäß einer Ausführungsform wird eine Anzahl von Temperaturunterschieden zwischen jeweils einer Temperatur einer jeweiligen Komponente der Anzahl der Komponenten des Fahrzeugantriebs und einem der jeweiligen Komponente zugeordneten Temperaturschwellwert erfasst. Dabei wird die Antriebsleistung des Fahrzeugantriebs reduziert, falls ein bezüglich zumindest einer der Komponenten erfasster Temperaturunterschied zu gering zum Betreiben des Fahrzeugantriebs in einem vorbestimmten oder erwarteten Fahrzustand ist. Dadurch wird in vorteilhafter Weise sichergestellt, dass für den vorbestimmten oder erwarteten, nachfolgenden Fahrzustand genügend Leistungsreserven vorhanden sind. Die Temperaturschwellwerte sind bevorzugt komponentenspezifisch und können gleich oder unterschiedlich sein, wodurch berücksichtigt wird, dass den jeweiligen Komponenten jeweils unterschiedliche kritische Temperaturen, welche beispielsweise in einem Bereich zwischen 60°C und 200°C liegen können, zugeordnet sein können.

Gemäß einer Ausführungsform ist der Temperaturschwellwert eine zum Betrieb der Komponenten maximal zulässige Temperatur, welche beispielsweise in dem vorgenannten Temperaturbereich liegen kann.

Gemäß einer Ausführungsform ist der Temperaturunterschied fest oder fahrzustandabhängig. Der Temperaturunterschied kann bevorzugt auf der Basis der Formel

$$\Delta T = [(P_{maxBeschleunigung} - P_{Kühl}) * t_{Überhol}]/C_{Komponente}.$$

erfasst werden. Dabei bezeichnen $P_{maxBeschteunigung}$ eine maximale Beschleunigungsverlustleistung, $P_{Kühl}$ eine aktuelle Kühlleistung oder eine prognostizierte Kühlleistung, welche beispielsweise bei Berücksichtigung einer Umgebungstemperatur ermittelt werden kann, $t_{Überhol}$ eine maximale Dauer eines Überholvorgangs, beispielsweise 20 s oder 40 s, und $C_{Komponente}$ eine thermische Komponentenkapazität.

Gemäß einer Ausführungsform wird die Zulässigkeit der Leistungsreduktion anhand der Auswertung von Navigationsdaten festgestellt, sodass in vorteilhafter Weise auch ein gefährliches Befahren einer Gegenfahrbahn erkannt werden kann.

Gemäß einem Aspekt betrifft die Erfindung eine programmtechnisch eingerichtete Vorrichtung, beispielsweise ein Steuergerät, welche ausgebildet ist, ein Computerprogramm zum Ausführen des erfindungsgemäßen Verfahrens auszuführen.

Gemäß einem weiteren Aspekt betrifft die Erfindung ein Computerprogramm mit einem Programmcode zum Ausführen des erfindungsgemäßen Verfahrens, wenn das Computerprogramm auf einem Computer läuft bzw. ausgeführt wird.

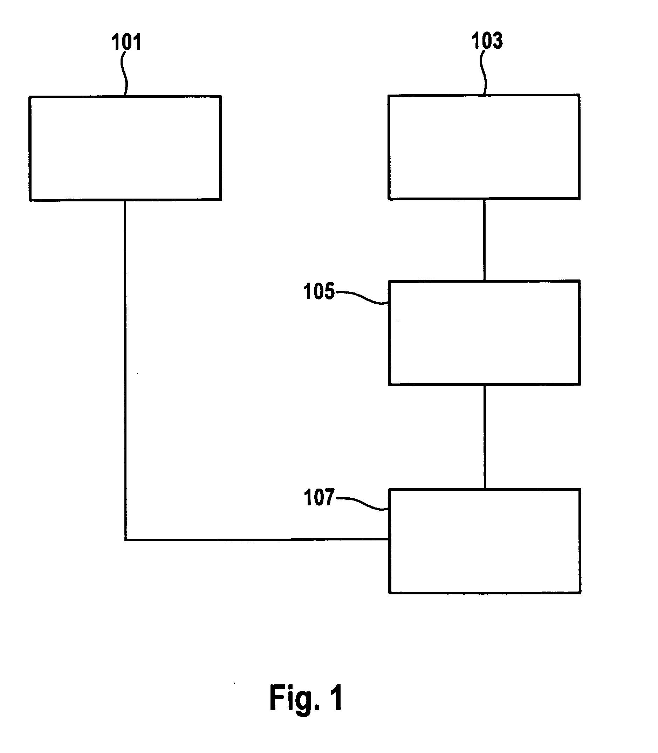

Weitere Ausführungsbeispiele der Erfindung werden Bezug nehmend auf die Fig. 1 erläutert, welche einen prinzipiellen Ablauf des erfindungsgemäßen Verfahrens zur Reduktion einer Antriebsleistung zeigt.

Wie in Fig. 1 dargestellt wird im Schritt 101 ein Temperaturunterschied zwischen einer Temperatur zumindest einer Komponente des Fahrzeugantriebs und einem Temperaturschwellwert erfasst. Gleichzeitig oder zuvor oder danach wird ein gegenwärtiger Fahrzustand des Fahrzeugantriebs, d.h. der Fahrzustand, in welchem sich der Fahrzeugantrieb gegenwärtig befindet, im Schritt 103 erfasst. Im Schritt 105 wird beispielsweise auf der Basis eines oder mehrerer Vergleiche festgestellt, ob der gegenwärtige Fahrzustand eine Reduktion der Antriebsleistung zulässt oder nicht zulässt. Anschließend wird im Schritt 107 die Antriebsleistung des Fahrzeugantriebs zur Senkung der Temperatur der zumindest einen Komponente reduziert, um den Temperaturunterschied zur Bereitstellung einer Temperaturreserve für einen beispielsweise nachfolgenden Fahrzustand zu erhöhen, falls der gegenwärtige Fahrzustand eine reduzierte Antriebsleistung zulässt. Mit anderen Worten wird die Antriebsleistung nur dann reduziert, wenn festgestellt wurde, dass der gegenwärtige Fahrzustand die Reduktion der Antriebsleistung zulässt.

Dadurch wird eine thermische Reserve für beispielsweise nachfolgende Fahrzustände, beispielsweise Überholmanöver oder Beschleunigungen, bereitgestellt, wobei gleichzeitig durch die Erfassung eines für die Antriebsleistungsreduktion nicht geeigneten Fahrzustands, beispielsweise eines Beschleunigungszustands oder eines Überholvorgangs, sichergestellt wird, dass die Reduktion der Antriebsleistung, beispielsweise der maximal zulässigen Antriebsleistung, nur in Fahrsituationen eingeleitet wird, welche eine gefahrlose Reduktion der Antriebsleistung ermöglichen. Dies ist beispielsweise insbesondere bei Rekuperation, bei konstanter Geschwindigkeit oder bei leichter Beschleunigung der Fall. Die Leistungsbegrenzung wird bevorzugt nur solange aufrechterhalten, bis beispielsweise ein unterer Grenztemperaturschwellwert unter Berücksichtigung einer beispielhaften Temperaturhysterese erreicht wurde.

Die thermische Reserve stellt sicher, dass beispielsweise während eines einmal eingeleiteten starken Beschleunigungsvorgangs die Antriebsleistung nicht zurückgenommen werden muss, so dass der Beschleunigungsvorgang sicher ausgeführt werden kann. Das bedeutet, dass das System beispielsweise so auszulegen ist, dass die Leistung beispielsweise bei einer Rekuperation oder einer leichten Beschleunigung mit einem Beschleunigungswert unterhalb des vorgenannten Beschleunigungswertes bereits im Vorfeld reduziert wird. Gleichzeitig kann eine Hinweisanzeige ausgegeben werden, welche beispielhaft anzeigt, dass die gegenwärtige Temperaturdifferenz zwischen der gegenwärtigen Temperatur der jeweiligen Komponente und einer maximal möglichen Temperatur der jeweiligen Komponente eine Sicherheitsreserve enthält, welche einen Beschleunigungsvorgang ermöglicht. Bevorzugt ist die Abschalttemperatur außerhalb kritischer Fahrmanöver daher gleich der maximal möglichen Temperatur abzüglich der Temperaturdifferenz. Die Temperaturdifferenz kann beispielsweise für jede fragliche Komponente getrennt auf der Basis der Formel

$$\Delta T = [(P_{maxBeschleunigung} - P_{Kühl}) * t_{Überhol}]/C_{Komponente}$$

ermittelt werden. Dabei bezeichnen $P_{maxBeschleunigung}$ eine maximale Beschleunigungsverlustleistung, $P_{Kühl}$ eine aktuelle Kühlleistung oder eine prognostizierte Kühlleistung, welche beispielsweise bei Berücksichtigung einer Umgebungstemperatur ermittelt werden kann, $t_{Überhol}$ eine maximale Zeitdauer eines Überholvorgangs, beispielsweise 20 s oder 40 s und $C_{Komponente}$ eine thermische Kapazität der jeweiligen, relevanten Komponente.

Die Zeitdauer $t_{Überhol}$ kann beispielsweise wie folgt abgeschätzt werden: Ausgehend von der Annahme, dass ein Beschleunigungsvorgang von 0 km/h auf 100 km/h bei einem unbeladenen Fahrzeug weniger als 20 s dauert, kann angenommen werden, dass derselbe Beschleunigungsvorgang bei einem beladenen Fahrzeug beispielsweise 30 s dauert. Dies bedeutet, dass für ein gegebenes Fahrzeug beispielsweise im Mittel alle zu erwartenden Beschleunigungsvorgänge in etwa maximal 30 s dauern können. Darüber hinaus kann angenommen werden, dass bei Überhol- oder Einfahrvorgängen auf beispielsweise Schnellstraßen meist geringere Geschwindigkeitsänderungen vorgenommen werden, so dass die Dauer der zu erwartenden Beschleunigungsvorgänge jeweils geringer ist.

Die Ermittlung der thermischen Reserve ist bevorzugt für jedes Fahrzeug bzw. für jede Komponente individuell zu ermitteln, da sie bevorzugt möglichst gering sein sollte, um beispielsweise die Antriebskomponenten thermisch möglichst gut auszunutzen. Gleichzeitig sollte die thermische Reserve so groß sein, dass ein gefährlicher Beschleunigungsvorgang sicher abgeschlossen werden kann.

Ferner kann beispielsweise mittels einer Fahrzeugsteuerung ein Signal gesetzt werden, welches anzeigt, dass eine Leistungsreduktion möglich ist, d.h. dass kein kritischer Beschleunigungsvorgang vorliegt und dass beispielsweise jede Komponente eine komponentenbezogene Leistungsreduktion, beispielsweise eine Abschaltung, bei Erreichen der jeweiligen Maximaltemperatur beispielsweise abzüglich der vorgenannten Temperaturdifferenz durchführt. Diese Komponente setzt dann beispielsweise ein Übertemperaturflag, das das Erreichen einer Übertemperatur anzeigt.

Zur Vermeidung von Fahrzustandssituationen, in denen der Fahrer beispielsweise langsam auf eine Kreuzung zufährt und gleichzeitig eine Leistungsbegrenzung bei einem gesetzten Signal, welcher beispielsweise unmittelbar bevor der Fahrer beschleunigen will die Leistungsreduktionsmöglichkeit anzeigt, auftritt, kann beispielsweise bei einer schnellen Bewegung des Gaspedals, beispielsweise bei einem Durchdrücken des Gaspedals, noch einmal trotz der beispielsweise gesetzten Hinweisanzeige die volle Antriebsleistung zur Verfügung gestellt werden, bis die maximal zulässige Temperatur erreicht wird oder falls die Beschleunigung wieder reduziert wird.

Die Antriebsleistung kann zur Abkühlung der jeweiligen Komponente sehr deutlich zurückgenommen werden, wodurch das Fahrzeug beispielsweise in einem Kriechzustand oder im Stillstand betrieben wird. Darüber hinaus kann fahrzustands- bzw. situationsbedingt entschieden werden, ob die Antriebsleistung derart reduziert wird, dass die jeweilige Komponente abgekühlt wird, oder dass die Antriebsleistung nur so weit reduziert wird, dass ein weiterer Anstieg einer Temperatur der jeweiligen Komponente verhindert wird, wodurch jeweils mehr Antriebsleistung zur Verfügung gestellt werden kann. Dies ist insbesondere vorteilhaft bei Befahren von Tunneln oder Straßen ohne Standstreifen. Derartige Fahrsituationen können beispielsweise mithilfe eines Navigationssystems, das die jeweilige Straßenbeschaffenheit kennt, ermittelt und mittels einer Fahrzeugsteuerung verhindert werden. Falls sich das Fahrzeug auf einer derartigen Straße befindet, so kann die Antriebsleistung bevorzugt nur so weit reduziert werden, dass sich die Temperatur der jeweiligen Komponente nicht erhöht. Gleichzeitig kann bevorzugt eine Hinweisanzeige gesetzt werden, welche den Fahrer auf die vorliegende Situation hinweist. Bevorzugt ist dabei jedoch sicherzustellen, dass zumindest ein verlangsamtes Fahren möglich ist, um die Gefahrenzone zu verlassen. Dadurch werden insbesondere gefährliche Situationen wie beispielsweise ein Stehenbleiben auf einem Bahnübergang vermieden.

Das erfindungsgemäße Konzept kann beispielsweise als ein Teil einer Steuerungssoftware für einen Wechselrichter, eine Batterie oder auch innerhalb einer zentralen Fahrzeugsteuerung implementiert werden. Die Verwendung der erfindungsgemäßen Strategie zur thermisch bedingten Leistungsbegrenzung kann für jedes Fahrzeug beispielsweise auf der Basis von Fahrversuchen, bei welchen das jeweilige Fahrzeug derart betrieben wird, dass eine thermische Leistungsbegrenzung eintritt, durchgeführt werden.

**Patentansprüche**

1.  Verfahren zur Reduktion einer Antriebsleistung eines Fahrzeugantriebs, mit:

    Erfassen (101) eines Temperaturunterschieds zwischen einer Temperatur zumindest einer Komponente des Fahrzeugsantriebs und einem Temperaturschwellwert;
    Erfassen (103) eines gegenwärtigen Fahrzustandes des Fahrzeugantriebs;
    Feststellen (105), ob der gegenwärtige Fahrzustand eine Reduktion der Antriebsleistung zulässt oder nicht zulässt; und
    Reduzieren (107) der Antriebsleistung des Fahrzeugantriebs zur Senkung der Temperatur der zumindest einen Komponente, um den Temperaturunterschied zu erhöhen, falls der gegenwärtige Fahrzustand die Reduktion der Antriebsleistung zulässt.

2.  Verfahren gemäß Anspruch 1, wobei die Antriebsleistung nicht reduziert wird, falls der gegenwärtige Fahrzustand die Reduktion der Antriebsleistung nicht zulässt.

3.  Verfahren nach einem der vorhergehenden Ansprüche, wobei der gegenwärtige Fahrzustand eine Reduktion der Antriebsleistung zulässt, wenn dieser ein konstanter oder ein gebremster Fahrzustand oder ein Rekuperationszustand oder ein beschleunigter Fahrzustand mit einer unterhalb eines Beschleunigungsschwellwertes liegenden Beschleunigung ist, und wobei der Fahrzustand eine Reduktion der Antriebsleistung nicht zulässt, wenn dieser ein beschleunigter Fahrzustand, insbesondere mit einer oberhalb eines Beschleunigungsschwellwertes liegenden Beschleunigung, oder ein Überholfahrzustand ist.

4.  Verfahren nach einem der vorhergehenden Ansprüche, wobei die Antriebsleistung nur dann reduziert wird, falls ein vorbestimmter oder erwarteter Fahrzustand mit einem Anstieg der Temperatur der Komponente verbunden ist, welcher nicht geringer als der Temperaturunterschied ist.

5.  Verfahren nach Anspruch 3, wobei der vorbestimmte oder erwartete Fahrzustand ein beschleunigter Fahrzustand oder ein Überholfahrzustand ist.

6.  Verfahren nach Anspruch 3 oder 4, wobei der erwartete Fahrzustand insbesondere anhand einer Gaspedalstellung oder einer Momentenanforderung oder einer Beschleunigungsanforderung erfasst wird.

7.  Verfahren nach einem der vorhergehenden Ansprüche, wobei die Komponente ein Elektromotor oder ein Verbrennungsmotor oder ein Energiespeicher oder ein Getriebe oder ein Inverter oder ein Pulswechselrichter ist.

8. Verfahren nach einem der vorhergehenden Ansprüche, wobei eine Anzahl von Temperaturunterschieden zwischen jeweils einer Temperatur einer jeweiligen Komponente der Anzahl von Komponenten des Fahrzeugs und einem der jeweiligen Komponente zugeordneten Temperaturschwellwert erfasst wird, und wobei die Antriebsleistung des Fahrzeugantriebs reduziert wird, falls ein bezüglich einer der Komponenten erfasster Temperaturunterschied zu gering zum Betreiben des Fahrzeugantriebs in einem bestimmten oder erwarteten Fahrzustand ist.

9. Verfahren nach einem der vorhergehenden Ansprüche, wobei der Temperaturschwellwert eine zum Betrieb der Komponente maximal zulässige Temperatur ist.

10. Verfahren nach einem der vorhergehenden Ansprüche, wobei der Temperaturunterschied fest oder Fahrzustand-abhängig ist und/oder auf der Basis der folgenden Formel

$$\Delta T = [(P_{maxBeschleunigung} - P_{Kühl}) * t_{Überhol}]/C_{Komponente}$$

ermittelt wird, wobei $P_{maxBeschleunigung}$ eine maximale Beschleunigungsverlustleistung, $P_{Kühl}$ eine aktuelle Kühlleistung oder eine prognostizierte Kühlleistung, welche beispielsweise bei Berücksichtigung einer Umgebungstemperatur ermittelt werden kann, $t_{Überhol}$ eine maximale Zeitdauer eines Überholvorgangs, beispielsweise 20 s oder 40 s und $C_{Komponente}$ eine thermische Komponentenkapazität bezeichnen.

11. Verfahren nach einem der vorhergehenden Ansprüche, wobei die Antriebsleistung nur dann reduziert wird, falls der Temperaturunterschied zum Betreiben des Fahrzeugsantriebs in einem vorbestimmten oder erwarteten Fahrzustand, insbesondere innerhalb eines vorbestimmten Intervalls, zu gering ist.

12. Verfahren nach einem der vorhergehenden Ansprüche, wobei die Zulässigkeit der Leistungsreduktion anhand der Auswertung von Navigationsdaten festgestellt wird.

13. Programmtechnisch eingerichtete Vorrichtung, insbesondere ein Steuergerät, welche ausgebildet ist, ein Computerprogramm zum Ausführen des Verfahrens gemäß einem der Ansprüche 1 bis 12 auszuführen.

14. Computerprogramm mit einem Programmcode zum Ausführen des Verfahrens gemäß einem der Ansprüche 1 bis 12, wenn das Computerprogramm auf einem Computer abläuft.

## Claims

1. Method for reducing the drive power of a vehicle drive, comprising:

    Sensing (101) a temperature difference between a temperature of at least one component of the vehicle drive and a temperature threshold value;
    sensing (103) a present driving state of the vehicle drive;
    determining (105) whether or not the present driving state permits a reduction in the drive power; and
    reducing (107) the driver power of the vehicle drive in order to lower the temperature of the at least one component, in order to increase the temperature difference if the present driving state permits the reduction of the drive power.

2. Method according to Claim 1, wherein the drive power is not reduced if the present driving state does not permit the reduction of the drive power.

3. Method according to one of the preceding claims, wherein the present driving state permits a reduction in the drive power if said driving state is a constant or a braked driving state or a recuperation state or an accelerated driving state with an acceleration which is below an acceleration threshold value, and wherein the driving state does not permit a reduction in the drive power if said driving state is an accelerated driving state, in particular with an acceleration which is above an acceleration threshold value, or an overtaking driving state.

4. Method according to one of the preceding claims, wherein the drive power is reduced only if a predetermined or expected driving state is connected to a rise in the temperature of the component, which rise is not less than the temperature difference.

5. Method according to Claim 3, wherein the predetermined or expected driving state is an accelerated driving state or an overtaking driving state.

6. Method according to Claim 3 or 4, wherein the expected driving state is sensed, in particular, on the basis of an accelerator pedal position or a torque request or an acceleration request.

7. Method according to one of the preceding claims, wherein the component is an electric motor or an internal combustion engine or an energy accumulator or a transmission or an inverter or a pulse-controlled convertor.

8. Method according to one of the preceding claims, wherein a number of temperature differences are sensed between, in each case, a temperature of a respective component of the number of components of the vehicle and a temperature threshold value assigned to the respective component, and wherein the drive power of the vehicle drive is reduced if a temperature difference which is sensed with respect to one of the components is too low to operate the vehicle drive in a specific or expected driving state.

9. Method according to one of the preceding claims, wherein the temperature threshold value is a maximum permissible temperature for the operation of the component.

10. Method according to one of the preceding claims, wherein the temperature difference is fixed or drive-state dependent and/or is determined on the basis of the following formula:

$$\Delta T = [(P_{maxacceleration} - P_{cool}) * t_{overtake}]/C_{component},$$

wherein $P_{maxacceleration}$ denotes a maximum loss of acceleration power, $P_{cool}$ denotes a current cooling power or a predicted cooling power which can be determined, for example, when an ambient temperature is taken into account, $t_{overtake}$ denotes a maximum duration of an overtaking manoeuvre, for example 20 s or 40 s, and Ccomponent denotes a thermal component capacity.

11. Method according to one of the preceding claims, wherein the drive power is reduced only if the temperature difference is too low to operate the vehicle drive in a predetermined or expected driving state, in particular within a predetermined interval.

12. Method according to one of the preceding claims, wherein the permissibility of the power reduction is determined on the basis of the evaluation of navigation data.

13. Device which is configured by means of programming technology, in particular a control unit which is designed to execute a computer program for carrying out the method according to one of Claims 1 to 12.

14. Computer program having a program code for carrying out the method according to one of Claims 1 to 12 when the computer program runs on a computer.

**Revendications**

1. Procédé de réduction de la puissance de l'entraînement d'un véhicule, le procédé comportant les étapes qui consistent à :

saisir (101) les différences de température entre la température d'un ou plusieurs composants de l'entraînement du véhicule et une valeur de seuil de température,
saisir (103) l'état de roulage en cours de l'entraînement du véhicule,
vérifier (105) si l'état de roulage en cours permet ou ne permet pas une réduction de la puissance de l'entraînement et
réduire (107) la puissance de l'entraînement du véhicule en vue d'abaisser la température du ou des composants pour augmenter la différence de température au cas où l'état de roulage en cours permet la réduction de la puissance de l'entraînement.

2. Procédé selon la revendication 1, dans lequel la puissance de l'entraînement n'est pas réduite au cas où l'état de roulage en cours ne permet pas la réduction de la puissance d'entraînement.

3. Procédé selon l'une des revendications précédentes, dans lequel l'état de roulage en cours permet une réduction de la puissance de l'entraînement lorsque cet état de roulage est un état de roulage constant, un état de roulage freiné, un état de récupération ou un état de roulage accéléré dont l'accélération est située en dessous d'une valeur de seuil de l'accélération, l'état de roulage ne permettant pas une réduction de la puissance d'entraînement lorsque cet état de roulage est un état de roulage accéléré, en particulier dont l'accélération est située au-dessus d'une valeur de seuil de l'accélération, ou un état de roulage en dépassement.

4. Procédé selon l'une des revendications précédentes, dans lequel la puissance de l'entraînement n'est réduite qu'au cas où un état de roulage prédéterminé ou attendu est associé à une augmentation de la température du composant qui n'est pas inférieure à la différence de température.

5. Procédé selon la revendication 3, dans lequel l'état de roulage prédéterminé ou attendu est un état de roulage accéléré ou un état de roulage en dépassement.

6. Procédé selon les revendications 3 ou 4, dans lequel l'état de roulage attendu est détecté en particulier au moyen de la position de la pédale d'accélération, d'une demande de couple ou d'une demande d'accélération.

7. Procédé selon l'une des revendications précédentes, dans lequel le composant est un moteur électrique, un moteur à combustion interne, un accumulateur d'énergie, une transmission, un inverseur ou un onduleur pulsé.

8. Procédé selon l'une des revendications précédentes, dans lequel le nombre des différences de température entre la température d'un des différents composants du véhicule et un seuil de température associé aux composants respectifs est détecté, la puissance de l'entraînement du véhicule étant réduite au cas où une différence de température saisie pour un des composants est trop faible pour utiliser l'entraînement du véhicule dans un état de roulage défini ou attendu.

9. Procédé selon l'une des revendications précédentes, dans lequel la valeur de seuil de température est une température maximale admissible pour le bon fonctionnement du composant.

10. Procédé selon l'une des revendications précédentes, dans lequel la différence de température est fixe, dépend de l'état de roulage et/ou est déterminée sur la base de la formule ci-dessous :

$$\Delta T = [(P_{maxBeschleunigung} - P_{K\ddot{u}hl}) * t_{\ddot{U}berhol}] / C_{Komponente}$$

dans laquelle $P_{maxBeschleunigung}$ représente la puissance maximale de perte à l'accélération, $P_{K\ddot{u}hl}$ la puissance de refroidissement en cours ou une puissance de refroidissement pronostiquée qui peut par exemple être déterminée en tenant compte de la température ambiante, $t_{\ddot{U}berhol}$ la durée maximale d'une opération de dépassement, par exemple de 20 s ou de 40 s et $C_{Komponente}$ la capacité calorifique du composant.

11. Procédé selon l'une des revendications précédentes, dans lequel la puissance de l'entraînement n'est réduite qu'au cas où la différence de température est trop basse pour utiliser l'entraînement du véhicule dans un état de roulage prédéterminé ou attendu, en particulier au cours d'un intervalle de temps prédéterminé.

12. Procédé selon l'une des revendications précédentes, dans lequel l'admissibilité d'une réduction de puissance est déterminée sur la base de l'évaluation de données de navigation.

13. Ensemble conçu sur la base de la technologie programmée, en particulier appareil de commande, configuré pour exécuter un programme informatique qui permet de mettre en oeuvre le procédé selon l'une des revendications 1 à 12.

14. Programme informatique doté d'un code de programme permettant de mettre en oeuvre le procédé selon l'une des revendications 1 à 12 lorsque le programme informatique se déroule sur un ordinateur.

**101**

**103**

**105**

**107**

# Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 11215888 A

- JP 2000032602 A